Europäisches Patentamt

European Patent Office

Office européen des brevets

(19)

(11) EP 0 807 519 A2

(12) DEMANDE DE BREVET EUROPEEN

(43) Date de publication:
19.11.1997 Bulletin 1997/47

(51) Int Cl.6: B32B 27/08, B65D 65/40

(21) Numéro de dépôt: 97401029.0

(22) Date de dépôt: 07.05.1997

(84) Etats contractants désignés:
AT BE CH DE DK ES FR GB IT LI LU NL SE

(30) Priorité: 14.05.1996 FR 9605998

(71) Demandeur: ELF ATOCHEM S.A.
92800 Puteaux (FR)

(72) Inventeur: Degrand, Michel M.
18, rue Barbey d'Aurevilly, 27300 Bernay (FR)

(54) **Films multicouches soudables par haute fréquence**

(57) L'invention concerne un film multicouche, utile pour faire des poches souples comprenant (i) un film barrière à base d'un mélange de polyamide et de polyoléfine et (ii) sur au moins l'une de ses faces un film à base d'un copolymère de l'éthylène et d'un ester insaturé soudable par haute fréquence.

Elle est utile pour faire des poches souples de détergents, d'eau de javel ou d'adoucissants pour les textiles.

EP 0 807 519 A2

**Description**

La présente invention concerne des films multicouches et plus particulièrement les films utilisés pour faire les poches souples de liquides ménagers tels que les détergents pour la vaisselle, le linge, l'eau de javel ou les adoucissants pour les textiles.

US 5 135 785 décrit des films constitués d'une couche de polyéthylène ou polypropylène entre deux couches d'un copolymère éthylène / acétate de vinyle (EVA) contenant au moins 18 % en poids d'acétate. On peut souder ces films pour faire des poches souples. Ces films ont une perméabilité à l'oxygène, en effet, quand les poches contiennent de l'eau de javel concentrée, il se produit au cours du temps une décomposition de l'eau de javel avec dégagement d'oxygène. Si cet oxygène ne peut s'évacuer, il peut y avoir rupture de la poche souple. Ces films sont aussi perméables aux parfums. L'art antérieur présente cette fuite des parfums vers l'extérieur de la poche comme devant permettre à l'utilisateur d'identifier le produit dans la poche souple.

La perte de parfum ne doit pas excéder 15 % en 90 jours de stockage de la poche. Tout ceci n'est qu'un souhait, cet art antérieur ne comporte aucun exemple. En fait, la demanderesse a trouvé que la fuite de parfum était telle qu'au bout de 30 jours la poche n'avait plus d'odeur bien qu'elle contenait à l'origine d'importantes quantités de parfum. L'EVA doit aussi contenir des agents glissants mais on ne dit pas lesquels et on ne peut souder le film que dans une plage de 4 à 20 semaines après sa fabrication.

EP 477 025 a aussi décrit de tels multicouches, ils sont constitués d'un polymère barrière entre deux couches d'EVA ou de copolymère éthylène / (méth)acrylate d'alkyle. Le polymère barrière peut être un polyéthylène basse densité linéaire (LLDPE), un bicouche polyamide-polyéthylène (PE), un bicouche EVOH-polyéthylène et de préférence un polyamide ou un EVOH entre deux couches de polyéthylène (EVOH désigne un copolymère de l'éthylène et de l'alcool vinylique aussi appelé EVA hydrolysé) ; c'est-à-dire que les films de l'art antérieur peuvent être constitués, par exemple, des couches suivantes :

EVA / PE / PA / PE / EVA

ou

EVA / PE / EVOH / PE / EVA

De plus, entre le PE et le PA comme entre l'EVOH et le PE, il est nécessaire de disposer un liant de coextrusion ou d'introduire dans le PE, l'EVOH ou le PA, un polymère ayant des groupes réactifs afin de faciliter l'adhérence des différentes couches. Les poches fabriquées avec ces multicouches sont perméables à l'oxygène, elles conviennent donc pour l'eau de javel.

Cependant, la barrière aux parfums ou aux odeurs des produits transportés est insuffisante. La demanderesse a maintenant trouvé un multicouche utile pour faire des poches souples soudées par haute fréquence et comprenant (i) un film barrière à base d'un mélange de polyamide et de polyoléfine et (ii) sur au moins l'une de ses faces un film à base d'un polymère de l'éthylène et d'un ester insaturé soudable par haute fréquence.

Ce film est suffisamment perméable à l'oxygène pour que les poches souples contenant de l'eau de javel et produites avec ce film ne se rompent pas. Un autre avantage de l'invention est la barrière aux parfums, il n'est plus nécessaire de mettre dans le produit contenu dans la poche d'importantes quantités de parfum pour être sûr de compenser les pertes pendant un stockage pouvant être de plusieurs mois. La demanderesse a en effet découvert que la barrière aux parfums d'un mélange de polyamide et de polyoléfine était supérieure à la barrière d'un bicouche polyamide / polyoléfine.

Un autre avantage de l'invention est la résistance mécanique du film multicouche et des poches ainsi formées. Un autre avantage du film de l'invention est sa facilité à être recyclé, en effet, au cours de sa fabrication et de celle des poches, il y a inévitablement des chutes, la demanderesse a découvert que les films à base d'un mélange de polyamide et de polyoléfine pouvaient se mélanger à du polyéthylène pour faire des films soufflés de polyéthylène alors que quand on recycle des films ayant une couche de polyamide et une couhe de polyéthylène dans du polyéthylène, le film obtenu était de mauvaise qualité.

S'agissant du polyamide de la couche barrière, on peut utiliser tout polyamide.

On entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de certains de ces monomères ce qui conduit à des copolyamides, par exemple, le PA-6/12 obtenu par condensation du caprolactame et du lauryllactame.

On peut utiliser des mélanges de polyamide. On utilise avantageusement le PA-6 (polycaprolactame) et le PA-6,6 (polyhexaméthylèneadipamide).

On entend par polyoléfines des polymères comprenant des motifs oléfines tels que par exemple des motifs éthylène, propylène, butène-1, etc...

A titre d'exemple, on peut citer :

-   le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
-   les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

-   les copolymères blocs styrène / éthylène-butène / styrène (SEBS) éventuellement maléisés.

On peut utiliser des mélanges de deux ou plusieurs de ces polyoléfines.

On utilise avantageusement :

-   le polyéthylène,
-   les copolymères de l'éthylène et d'une alpha-oléfine,
-   les copolymères de l'éthylène / d'un (méth)acrylate d'alkyle,
-   les copolymères de l'éthylène / d'un (méth)acrylate d'alkyle / de l'anhydride maléique, l'anhydride maléique étant greffé ou copolymérisé,
-   les copolymères de l'éthylène / d'un (méth)acrylate d'alkyle / du méthacrylate de glycidyle, le méthacrylate de glycidyle étant greffé ou copolymérisé,
-   le polypropylène.

Il est recommandé, pour faciliter le mélange de polyoléfine et de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :

-   le polyéthylène, le polypropylène, les copolymères éthylène propylène, les copolymères éthylène-butène, tous ces produits étant greffés par de l'anhydride maléique ou du méthacrylate de glycidyle.
-   les copolymères éthylène / (méth)acrylate d'alkyle / anhydride maléique, l'anhydride maléique étant greffé ou copolymérisé,
-   les copolymères éthylène / acétate de vinyle / anhydride maléique, l'anhydride maléique étant greffé ou copolymérisé.

-   les deux copolymères précédents dans lesquels l'anhydride maléique est remplacé par le méthacrylate de glycidyle,
-   les copolymères éthylène / acide (méth)acrylique éventuellement leurs sels,
-   le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

Le mélange de polyamide et de polyoléfine de la couche barrière peut être majoritaire en polyéthylène selon une forme de l'invention ou majoritaire en polyamide selon une autre forme.

S'agissant de cette deuxième forme, la quantité de polyamide formant la matrice dans la couche barrière peut être comprise entre 30 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche barrière par mélange de polyamide, de polyoléfine et éventuellement de compatibilisant selon les techniques usuelles de mélange à l'état fondu (bi vis, Buss, monovis).

Avantageusement, la couche barrière comprend une matrice de polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un compatibilisant qui est avantageusement un copolymère éthylène / propylène majoritaire en nombre de motifs propylène, greffé par l'anhydride maléique, puis condensé ensuite avec des oligomères mono aminés de caprolactame.

Ces mélanges de polyamide et de polyoléfine de la couche barrière peuvent être plastifiés et éventuellement contenir des charges telles que du noir de carbone, etc.

De tels mélanges de polyamide et de polyoléfine sont décrits dans le brevet US 5 342 886.

La quantité de polyamide est comprise entre 30 et 75 parties pour 100 parties du mélange polyamide/polyoléfine et de préférence 50 à 75.

A titre d'exemple, on peut utiliser les mélanges suivants (en % poids) :

1)

- 55 à 70 % de PA-6.
- 5 à 15 % d'un copolymère éthylène propylène majoritaire en polypropylène greffé par de l'anhydride maléique puis condensé ensuite avec des oligomères monoaminés de caprolactame.
- le complément à 100 % en polypropylène.

2)

- 55 à 70 % de PA-6.
- 5 à 15 % d'au moins un copolymère de l'éthylène avec (i) un (méth)acrylate d'alkyle ou un ester vinylique d'acide carboxylique insaturé et (ii) un anhydride d'acide carboxylique insaturé ou un époxyde insaturé greffé ou copolymérisé.
- le complément en polyéthylène.

3)

- 55 à 70 % de PA-6.
- 5 à 15 % de polyéthylène ou copolymères de l'éthylène et d'une alphaoléfine greffé par de l'anhydride maléique ou du méthacrylate de glycidyle.
- le complément en polyéthylène.

Quant au copolymère de l'éthylène et d'un ester insaturé soudable par haute fréquence, l'ester peut être choisi parmi les esters vinyliques d'acides carboxyliques saturés ayant par exemple 2 à 6 atomes de carbone tels que l'acétate de vinyle ou le propionate de vinyle et parmi les esters d'acides carboxyliques insaturés tels que par exemple les (méth)acrylate d'alkyle dont le groupe alkyle a de 1 à 20 atomes de carbone.

Ces copolymères d'éthylène et d'un ester insaturé peuvent aussi comprendre :
des monomères ayant des fonctions :

- acides carboxyliques tels que l'acide (méth)acrylique, des sels d'acides carboxyliques tels que les ionomères, ou des anhydrides d'acides carboxylique tels que l'anhydride maléique,

- ou des monomères ayant des fonctions epoxy tels que le (méth)acrylate de glycidyle ;

ces monomères pouvant être greffés ou copolymérisés.

Les copolymères de la couche soudable peuvent aussi être mélangés entre eux et/ou avec des polyoléfines, des polyéthylènes ou des copolymères d'éthylène et d'alphaoléfine.

Avantageusement, le copolymère (ou le mélange) formant la couche soudable est tel qu'il contient au plus 50 % en poids d'acétate de vinyle et de préférence entre 12 et 30 %.

Avantageusement, le mélange de la couche soudable contient aussi des agents glissants pour faciliter leur extrusion et aussi leur passage dans les machines à souder.

Selon une forme avantageuse de l'invention, le film soudable à base d'un copolymère de l'éthylène et d'un ester insaturé comprend une quantité suffisante d'au moins un N,N'-éthylène bis amide de formule :

$$[C_n H_{2n\pm1} - C(0) - NH - CH_2]_2$$

dans laquelle n est un nombre entier allant de 17 à 21, pour obtenir un temps de soudure HF au plus égal à une seconde et, de préférence, compris entre 0,2 et 0,5 seconde.

A titre d'illustration de N,N'-éthylène bis amide utilisable selon la présente invention, on citera le N,N'-éthylène bis stéaramide, le N,N'-éthylène bis oléamide, le N,N'-éthylène bis gadoléamide, le N,N'-éthylène bis cétoléamide, le N,N'-éthylène bis érucamide, et le mélange d'au moins deux N,N'-éthylène bis amides précités.

Parmi les N,N'-éthylène bis amides, l'invention concerne tout particulièrement le N,N'-éthylène bis oléamide désigné ci-après par EBO.

Le temps de soudure -inférieure ou au plus égal à 1 seconde- peut être obtenu moyennant l'utilisation d'une teneur pondérale en N,N'-éthylène bis amide au plus égale à 0,6 % et, de préférence, comprise entre 0,3 % et 0,5 % par rapport au film thermoplastique.

Selon une variante de l'invention le film soudable comprend en outre un additif anti-bloquant choisi dans le groupe constitué par les amides primaires d'acide gras, la silice, le talc et le mélange d'au moins deux des composés précités.

A titre d'illustration d'amide primaire d'acide gras saturé, on peut citer l'érucamide, l'oléamide, le stéaramide, le palmitamide et le mélange d'au moins deux des composés précités.

Parmi ces amides primaires d'acide gras, on préfère utiliser l'érucamide.

Ces additifs anti-bloquant peuvent être utilisés en des proportions ne dépassant pas environ 2 % en poids par rapport au film soudable.

Ce film peut également contenir au moins un additif usuel tel que :

- additif améliorant le caractère glissant comme par exemple un sel métallique d'acide gras (stéarate de zinc),
- antioxydant, comme par exemple un phénol à empêchement stérique, un mercaptan ou un phosphite,
- absorbeurs de rayonnement ultraviolet, tels que les benzophénones substituées, les phénylbenzotriazoles substitués et les amines à empêchement stérique. Extincteurs tels que des complexes de nickel, pigment minéral ou organique, tel que l'oxyde de zinc ou l'oxyde de titane.

Selon la présente invention les amides primaires d'acide gras saturé et les additifs mentionnés précédemment doivent être utilisés en des quantités telles qu'ils n'altèrent pas la vitesse de soudabilité.

L'épaisseur du films barrière peut être comprise entre 10 et 100 μm de préférence 20 à 40 μm. L'épaisseur du film soudable (c'est-à-dire le film a base d'un copolymère de l'éthylène et d'un ester insaturé) peut être comprise entre 50 et 150 μm de préférence 60 à 100 μm. Le film multicouche de l'invention peut être obtenu par coextrusion selon les techniques connues telles que l'extrusion de gaine ou l'extrusion en filière plate.

La présente invention concerne aussi les emballages comprenant le film multicouches précédent qu'on a soudé sur lui-même du côté du film soudable.

Avantageusement, le film multicouches de l'invention comprend aussi un film soudable sur l'autre face, c'est-à-dire qu'il comprend le film barrière entre deux films (ou deux couches) à base du copolymère de l'éthylène et d'un ester insaturé soudable.

Selon une variante de l'invention, on peut disposer entre la couche barrière et au moins l'une des couches soudables un liant pour améliorer l'adhérence.

Ces liants de coextrusion sont connus en eux-mêmes.

A titre d'exemple de liant, on peut citer :

- le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique. On peut aussi utiliser des mélanges de ces polymères greffés et de ces polymères non greffés.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les epoxydes insaturés ; ces copolymères pouvant être greffés par des anhydrides d'acides dicarboxyliques insaturés tels que l'anhydride maléique ou des epoxydes insaturés tels que le méthacrylate de glycidyle.

On peut aussi ajouter à l'une ou à chacune des couches un produit qui améliore leur adhérence sans devoir utiliser une couche de liant. Ce produit peut être le liant décrit ci-dessus.

On ne sortirait pas du cadre de l'invention en disposant entre la (ou les) couche soudable et la couche barrière d'autres couches pouvant être en polyamide, EVOH, etc....

La soudure des films de la présente invention peut être effectuée par une méthode connue qui consiste à amener entre les plateaux éventuellement préchauffés d'une presse à souder HF au moins deux films, à appliquer une pression qui est fonction de l'épaisseur des films à souder, puis après avoir accordé le circuit oscillant pour obtenir le maximum d'énergie on applique sur les couches maintenues en pression, un courant de fréquence égale à 27,12 MHz.

On maintient ce courant pendant un temps -dit temps de soudure- qui en général n'excède pas 1 seconde puis éventuellement on refroidit avant de récupérer les films soudés.

Sur les films obtenus on détermine la résistance à la rupture selon la norme 54120.

Les films selon la présente invention l'avantage d'avoir une résistance élevée à la rupture même pour des temps de soudure très courts, environ 0,2 seconde.

Ces films sont notamment utilisables pour l'emballage de produits d'entretien.

Les emballages fabriqués avec ces matériaux possèdent une résistance élevée au test de compression. Ce test consiste à poser sur une surface plane l'emballage rempli de liquide et soudé puis à poser sur le dit emballage une plaque chargée d'un poids de 200 kg. L'emballage ne doit pas présenter de fuites.

## Exemples

On utilise les matériaux suivants :

EVA : désigne un copolymère éthylène-acétate de vinyle à 24 % d'acétate et MFi 3 (190° C - 2,16 kg)

PA : désigne un polyamide 6 de MFi 2 (à 235° C - 2,16 kg)

PA1 : désigne un mélange de polyamide 6, VLDPE (PE très basse densité) et d'un copolymère éthylène / acrylate de butyl / anhydride maléique (à 6 % d'acrylate et 3 % d'anhydride maléique) en proportions respectives de 65 / 25 / 10 /.

L1 : désigne un polyéthylène greffé à 0,2 % MAH de MFi 3-4

## Exemple 1

On a réalisé en coextrusion sur une ligne cast 5 couches ERWEPA

un film 1 : EVA / L1 / PA / L1 / EVA
d'épaisseur 80 / 10 / 100 / 10/80 (en μm)
un film 2 : EVA / L1 / PA1 / L1/EVA d'épaisseur 80/10/100/10/80 (en µm)
On a mesuré les perméabilités à la vapeur d'eau selon la norme ASTM E 96
Film 1 : 20 g / m² / 24 h
Film 2 : 14 g / m² / 24 h

## Exemple 2

On a réalisé en coextrusion sur ligne cast 5 couches "ERWEPA"
un film EVA / L1 / PA1 / L1 / EVA d'épaisseur en µm 80 / 10 / 40 / 10 / 80. L'EVA est chargé de :

3,6 % TiO$_2$
0,3 % EBO éthylène bis oléamide
0,1 % Erucamide

A partir de ce film, on a soudé par HF à 27,12 MHz des poches de 250 ml sur une machine SERTIC.
L'opération comprenant :

• la confection de la poche
• le remplissage
• la fermeture et la découpe

Le débit de la machine est de 40 à 45 poches par minute.

Les poches ont toutes résisté aux tests de compression supérieurs à 200 daN.

On a comparé la perméabilité aux parfums de ce matériau avec un multicouche EVA / PE / EVA d'épaisseurs (en µm) 90 / 40 / 90 et un multicouche de même nature mais d'épaisseur 50 / 80 / 90 dans lesquels PE désigne un polyéthylène moyenne densité radicalaire de melt index 2.

On a fabriqué des poches avec des matériaux multicouches selon l'invention (ex 2) et selon les deux multicouches ci-dessus. Elles ont été remplies d'un adoucissant textile contenant 15 à 30 % de tensions-actifs cationiques, d'agents conservateurs et d'une essence de lavande.

Au bout de 30 jours, les poches ont été coupées et ouvertes. Seule la poche de l'invention contient un liquide ayant une odeur, alors que dans les deux autres liquides, l'odeur est fortement atténuée.

## Revendications

1. Film multicouche, utile pour faire des poches souples comprenant (i) un film barrière à base d'un mélange de polyamide et de polyoléfine et (ii) sur au moins l'une de ses faces un film à base d'un copolymère de l'éthylène et d'un ester insaturé soudable par haute fréquence.

2. Film multicouche selon la revendication 1 dans lequel le polyamide du film barrière est du polyamide-6 ou du polyamide-6,6.

3. Film multicouche selon la revendication 1 ou 2 dans lequel le copolymère de l'éthylène et d'un ester insaturé du film soudable est un copolymère éthylène / acétate de vinyle.

4. Film multicouche selon l'une quelconque des revendications précédentes dans lequel la couche soudable comprend une quantité suffisante d'au moins un N,N'-éthylène bis amide de formule :
[C$_n$ H$_{2n\pm1}$ - C(0) - NH - CH$_2$]$_2$ dans laquelle n est un nombre entier allant de 17 à 21 pour obtenir un temps de soudure HF au plus égal à une seconde et de préférence compris entre 0,2 et 0,5.

5. Emballage comprenant le film multicouche de l'une quelconque des revendications précédentes qu'on a soudé sur lui-même du côté du film soudable.